# FASCICULE DE BREVET EUROPEEN

(11) **EP 3 733 524 B1**
(45) Date de publication et mention de la délivrance du brevet: **29.12.2021**
(21) Numéro de dépôt: 20167884.4
(22) Date de dépôt: 03.04.2020
(51) Int. Cl.: B64D 27/04, B64D 29/00, B64D 33/02

(54) **GIRAVION EQUIPE D'UN DISPOSITIF AERODYNAMIQUE COMPORTANT UN CARENAGE PRESENTANT UNE ENTREE D'AIR**
DREHFLÜGELFLUGZEUG, DAS MIT EINER AERODYNAMISCHEN VORRICHTUNG AUSGESTATTET IST, DIE EINE ABDECKUNG MIT EINEM LUFTEINLASS UMFASST
ROTORCRAFT PROVIDED WITH AN AERODYNAMIC DEVICE COMPRISING A FAIRING HAVING AN AIR INTAKE

(30) Priorité: 30.04.2019 FR 1904542
(43) Date de publication de la demande: 04.11.2020
(73) Titulaire: Airbus Helicopters, 13725 Marignane Cedex (FR)
(72) Inventeur: SERR, Christophe, 13109 SIMIANE-COLLONGUE (FR); HONNORAT, Olivier, 13290 AIX EN PROVENCE (FR); COQUILLAT, Jean-Christophe, 13710 FUVEAU (FR)
(74) Mandataire: GPI Brevets

(56) Documents cités:
- WO-A2-2015/198296
- FR-A1- 2 952 401
- US-A1- 2002 182 062
- US-A1- 2019 084 687
- Anonymous: "Eurocopter X3 - Flugschrauber", , 10 janvier 2020 (2020-01-10), XP055657028, Extrait de l'Internet: URL:http://www.flugzeuglexikon.com/ILA%20- %20Luftfahrtausstellung/Hubschrauber/Euroc opter%20X3%20-%20Flugschrauber/eurocopter% 20x3%20-%20flugschrauber.html [extrait le 2020-01-10]

## Description

La présente invention se rapporte au domaine aéronautique et plus particulièrement au domaine des giravions. De tels aéronefs comportent ainsi au moins un rotor muni de pales permettant de réaliser une sustentation d'un aéronef, voire également une propulsion de l'aéronef, dans les airs.

Plus précisément, l'invention trouve son application dans le domaine des dispositifs aérodynamiques agencés au niveau du fuselage ou de l'enveloppe d'un tel giravion. De tels dispositifs aérodynamiques peuvent comporter un carénage permettant par exemple de protéger un moteur et/ou une boite de transmission de puissance d'un giravion.

En outre, de tels carénages peuvent comporter une ou plusieurs entrées d'air frais permettant par exemple à l'air extérieur de pénétrer à l'intérieur du fuselage du giravion de manière à refroidir un fluide caloriporteur circulant dans un échangeur thermique ou encore à alimenter en comburant un moteur du giravion.

Cependant, l'air frais peut être aspiré à différents niveaux de pression au niveau de ces entrées d'air. En effet, la pression en entrée du flux d'air frais peut varier notamment en fonction de la dépression générée par un organe aspirant tel qu'un moteur ou un ventilateur situés en aval de l'entrée d'air ou encore des phases de vol du giravion.

En outre, l'embouchure de l'entrée d'air située au niveau du fuselage est complexe à dimensionner.

En effet, lors d'une phase de vol stationnaire du giravion, une grande embouchure de l'entrée d'air permet de minimiser les pertes de charges et garantit ainsi un fonctionnement optimal de l'organe alimenté en air frais par un tel dispositif aérodynamique, tel que par exemple un échangeur thermique ou un moteur.

Cependant lors d'une phase de vol d'avancement, une grande embouchure peut générer un refoulement non contrôlé d'air frais et susceptible d'engendrer une traînée de captation non négligeable avec un risque de vibrations au niveau de la poutre de queue et/ou un mauvais refroidissement d'un échangeur thermique.

En revanche une embouchure de petites dimensions engendre, lors d'une phase de vol stationnaire du giravion des pertes de charge au niveau de cette embouchure. De telles pertes de charge peuvent pénaliser les performances d'un ventilateur et/ou peuvent produire un mauvais refroidissement d'un échangeur thermique.

Par contre, lors d'une phase de vol d'avancement du giravion, une embouchure de petites dimensions permet de minimiser le débit d'air frais refoulé par l'entrée d'air.

Ainsi, l'embouchure est dimensionnée en fonction d'un compromis permettant notamment d'assurer une alimentation en air frais d'un moteur ou d'un échangeur thermique acceptable en fonction d'objectifs à retenir lors d'une phase de vol stationnaire du giravion et/ou lors d'une phase de vol d'avancement du giravion.

Dès lors, un tel compromis peut induire des restrictions quant à la performance d'un giravion et/ou en termes de design aérodynamique du carénage en général et de l'entrée d'air en particulier.

Par ailleurs, tel que décrit dans le document FR 2 952 401, il est connu d'équiper une entrée d'air avec un caisson extérieur rapporté devant l'entrée d'air. Un tel caisson comporte des orifices supérieurs permettant à l'air frais propulsé par le rotor de traverser le caisson lors de phase de vol stationnaire. De plus, le caisson comporte un orifice frontal.

Cependant, un tel caisson forme une protubérance aérodynamique et peut dégrader la traînée du giravion.

En outre, les documents XP 055657028 et FR 2 952 401 décrivent également une entrée d'air comportant un conduit s'étendant à l'intérieur du volume délimité par le carénage et dans lequel une grille est positionnée sensiblement perpendiculairement par rapport à une direction longitudinale du conduit. La grille est en outre agencée à l'intérieur du conduit de l'entrée d'air et permet ainsi de séparer longitudinalement le conduit en deux portions distinctes.

Une telle grille est généralement formée par deux nappes de fils respectivement parallèles entre eux, une première nappe de fils parallèles selon une première direction étant superposée sur une deuxième nappe de fils parallèles selon une seconde direction. Dans ce cas, le positionnement relatif des différents fils parallèles permet alors de définir des ouvertures régulièrement réparties entre chaque croisement de fils. Ces différentes ouvertures sont alors généralement de forme carrée ou rectangulaire. Les ouvertures décrites dans les documents XP 055657028 et FR 2 952 401 sont ainsi toutes de forme carrée et sont identiques entre elles.

De plus dans ces documents, la grille a uniquement une fonction de protection contre l'ingestion de corps étrangers et ne permet en aucun cas, lors de phases de vol stationnaire ou d'avancement du giravion, d'adapter le débit d'air frais capté par une embouchure de l'entrée d'air.

D'autres systèmes visant à équiper des entrées d'air de giravion ont notamment été décrits dans les documents, US 4 502 875, US 3 998 048 et EP 2 871 131 mais aucun des dispositifs aérodynamiques décrits ne fournit une solution simple et optimale permettant de réaliser et d'adapter la taille d'une entrée d'air.

Le document US 2019/084687 décrit quant à lui un aéronef muni d'au moins une entrée d'air positionnée sur un capot. Une telle entrée d'air comporte cependant une embouchure totalement ouverte puisque la fonction de cette entrée d'air est de servir de poignée de préhension pour soulever le capot. Une telle embouchure doit donc être laissée libre pour permettre à un opérateur de saisir avec sa main l'entrée d'air.

La présente invention a alors pour objet de proposer un giravion équipé d'un dispositif aérodynamique comportant un carénage présentant une entrée d'air optimisée par exemple pour différentes missions ou utilisations d'un même giravion.

L'invention concerne donc un giravion comportant un dispositif aérodynamique agencé en dessous d'un rotor participant au moins à la sustentation du giravion dans les airs, le rotor tournant autour d'un axe de rotation (OZ), le dispositif aérodynamique comportant un carénage présentant au moins une entrée d'air pour permettre un écoulement d'un flux d'air frais entre une zone située à l'extérieur du giravion vers une autre zone située à l'intérieur du giravion, la ou les entrées d'air étant délimitées respectivement par une portion périphérique externe du carénage.

Selon l'invention, un tel giravion est remarquable ce qu' au niveau de chaque embouchure de la ou des entrées d'air du carénage, le dispositif aérodynamique comporte une plaque perforée munie d'au moins une perforation, la ou les perforations étant aptes à être traversées par le flux d'air frais, la plaque perforée comportant au moins une portion principale conformée pour épouser une forme externe de la portion périphérique externe du carénage.

Autrement dit, une telle plaque perforée peut, au niveau de sa portion principale être par exemple légèrement bombée pour suivre sensiblement la même forme externe de la portion périphérique externe du carénage.

En outre, de telles perforations peuvent être formées par des perçages mais peuvent aussi présenter des formes quelconques Ainsi, les perforations peuvent par exemple être réalisées par un procédé d'usinage, de poinçonnage ou de découpage au laser ou encore au jet d'eau dans une plaque formée par une feuille fine métallique. Selon d'autres modes de réalisation envisagés, les perforations peuvent également être réalisées directement lors d'une fabrication par un procédé de moulage de la plaque perforée et ne sont donc pas réalisées ultérieurement à la fabrication de la plaque.

Par ailleurs, contrairement à une grille présentant des ouvertures régulièrement réparties et généralement de forme carrée ou rectangulaire, en modifiant librement la taille, le positionnement, la forme et/ou le nombre de perforations d'une plaque perforée, il est possible d'adapter les caractéristiques relatives au débit d'air admissible par une même embouchure d'entrée d'air.

De plus, l'utilisation d'une telle plaque perforée permet également d'adapter les caractéristiques relatives au débit d'air admissible par une même embouchure d'entrée d'air sans avoir besoin de modifier et de remplacer le carénage.

Une telle invention permet alors de sélectionner et d'installer une plaque perforée spécifique par exemple en fonction d'une mission du giravion, des besoins d'un client souhaitant acheter un tel giravion ou encore des conditions météorologiques dans lesquelles le giravion sera amené à voler.

En pratique, la plaque perforée peut présenter un taux de perforations compris entre 10% et 90% représentatif d'une surface de passage de la ou des perforations par rapport à une surface totale de la plaque perforée.

En effet, un tel taux de perforations permet de s'adapter aux différentes conditions de vol et permet de fournir un débit en air frais optimum que ce soit lors des phases de vol stationnaire ou en avancement du giravion.

Avantageusement, la plaque perforée peut s'étendre latéralement de part et d'autre d'un plan antéropostérieur du giravion, le plan antéropostérieur étant agencé verticalement et s'étendant entre une zone avant du giravion et une zone arrière du giravion.

Ainsi, une telle plaque perforée peut alors couper le plan antéropostérieur du giravion et n'est pas inscrite dans un tel plan.

Selon un exemple de réalisation de l'invention, dans le plan antéropostérieur du giravion, la plaque perforée peut comporter au moins une génératrice telle que, selon une première direction D1 orientée depuis la zone avant du giravion vers la zone arrière, la ou les génératrices s'étendent en élévation vers le rotor, la ou les génératrices comportant chacune une extrémité proximale et une première extrémité distale, l'extrémité proximale étant agencée dans un premier plan situé, selon une deuxième direction D2 parallèle à l'axe de rotation et orientée depuis une zone inférieure du giravion vers une zone supérieure du giravion, en dessous d'un deuxième plan comprenant la première extrémité distale.

Une telle génératrice forme alors une ligne d'intersection entre une face de la plaque perforée et le plan antéropostérieur du giravion.

La génératrice est par ailleurs orientée de manière montante vers le rotor du giravion selon la deuxième direction D2 et s'étend entre son extrémité proximale et sa première extrémité distale.

En d'autres termes, la plaque perforée est inclinée sensiblement vers le rotor du giravion pour pouvoir capter un air frais selon des débits différents lors de phases de vol stationnaire et d'avancement.

En fonction de l'orientation du flux d'air frais incident au niveau de la plaque perforée, les perforations peuvent présenter des surfaces ou aires utiles différentes. En outre, en vol d'avancement, les perforations ont une aire utile dimensionnée pour un certain débit d'air frais à une certaine vitesse du giravion. Il est donc possible de dimensionner les perforations selon un débit d'air frais souhaité en vol d'avancement.

Par ailleurs, lors de phases de vol stationnaire, les perforations ont une surface utile plus grande grâce à l'angle d'inclinaison de la plaque perforée et à l'incidence du flux d'air frais orienté sensiblement perpendiculairement à la plaque perforée.

Ainsi le positionnement incliné de la plaque perforée permet également de maximiser le débit frais passant par l'entrée d'air pour les phases de vol en stationnaire.

En pratique, la plaque perforée peut présenter au moins un rabat tel que, dans le plan antéropostérieur du giravion et selon une troisième direction D3 opposée à la première direction D1, la ou les génératrices formant le ou les rabats s'étendent en élévation vers le rotor, la ou les génératrices comportant chacune une seconde extrémité distale, la première extrémité distale étant agencée dans le deuxième plan situé, selon la deuxième direction D2, en dessous d'un troisième plan comprenant la seconde extrémité distale.

Un tel rabat s'oppose donc à l'inclinaison de la portion principale de la plaque perforée et n'est donc pas conformé pour épouser la forme externe de la portion périphérique externe du carénage.

Avantageusement, la ou les perforations peuvent présenter chacune une forme de fente allongée.

Une telle forme de fente peut par exemple s'étendre principalement perpendiculairement par rapport au plan antéropostérieur du giravion.

En outre, selon un autre exemple de réalisation de l'invention, une telle forme de fente peut également s'étendre sensiblement parallèlement par rapport au plan antéropostérieur du giravion.

Plus précisément, la ou les perforations peuvent présenter chacune une forme de fente allongée et ascendante au fur et à mesure que la fente s'éloigne du plan antéropostérieur du giravion.

Autrement dit, les fentes peuvent ne pas être purement perpendiculaires au plan antéropostérieur du giravion mais présenter un rayon de courbure pour s'étendre en élévation vers le rotor en s'éloignant du plan antéropostérieur du giravion.

Selon un exemple de réalisation avantageux de l'invention, la ou les perforations peuvent comporter une première perforation agencée dans une portion gauche de la plaque perforée par rapport au plan antéropostérieur du giravion et une deuxième perforation agencée dans une portion droite de la plaque perforée par rapport au plan antéropostérieur du giravion, la première perforation et la deuxième perforation étant agencées symétriquement par rapport au plan antéropostérieur du giravion.

En d'autres termes, le plan antéropostérieur du giravion peut être un plan de symétrie pour les perforations de la plaque perforée.

En outre, la portion gauche de la plaque perforée peut être définie comme étant localisée à gauche du plan antéropostérieur du giravion lorsqu'un opérateur regarde selon la troisième direction D3 orientée depuis la zone arrière du giravion vers la zone avant. Par analogie, la portion droite de la plaque perforée peut être définie comme étant localisée à droite du plan antéropostérieur du giravion lorsqu'un opérateur regarde selon cette troisième direction D3.

En pratique, au moins dans le plan antéropostérieur du giravion, la plaque perforée peut présenter une portion pleine continue.

Dans ce cas, les perforations ne traversent alors pas le plan antéropostérieur du giravion mais sont agencées exclusivement de part et d'autre du plan antéropostérieur du giravion.

Avantageusement, la plaque perforée peut être agencée dans l'embouchure, une ouverture périphérique s'étendant entre la plaque perforée et le carénage.

Ainsi, une telle ouverture périphérique peut également être traversée par de l'air frais pendant la ou les phases de vol stationnaire et/ou en avancement du giravion.

Selon un autre exemple de réalisation avantageux de l'invention, le dispositif aérodynamique peut comporter des moyens de solidarisation réversible permettant, lorsque le giravion est au sol, d'escamoter la plaque perforée et de remplacer la plaque perforée par une autre plaque perforée.

En outre, un tel agencement permet alors de modifier rapidement les caractéristiques de débit admissible d'une entrée d'air par exemple entre deux missions distinctes d'un même giravion.

En pratique, les moyens de solidarisation réversible peuvent être choisis parmi le groupe comportant des organes de vissage de type « quarts de tour » à actionnement manuel ou au moyen d'un outil tel un tournevis, des systèmes de goupillage de type « attache rapide », les aimants, les organes complémentaires à encliquetage et les doigts d'indexage.

Bien entendu, des moyens de solidarisation classiques peuvent également être utilisés et présenter par exemple une vis, un écrou ou un rivet pour solidariser la plaque perforée avec le carénage du dispositif aérodynamique.

L'invention et ses avantages apparaîtront avec plus de détails dans le cadre de la description qui suit avec des exemples donnés à titre illustratif en référence aux figures annexées qui représentent :
[Fig 1] - la figure 1, une vue en perspective d'un giravion conforme à l'invention,
[Fig 2] - la figure 2, une vue de face d'un dispositif aérodynamique, conformément à l'invention,
[Fig 3] - la figure 3, une vue de dessus du dispositif aérodynamique, conformément à l'invention, et
[Fig 4] - la figure 4, une vue de côté du dispositif aérodynamique, conformément à l'invention.

Les éléments présents dans plusieurs figures distinctes peuvent être affectés d'une seule et même référence.

Comme déjà indiqué, l'invention concerne un giravion présentant au moins un rotor qui participe au moins à la sustentation, voire à la propulsion, du giravion dans les airs.

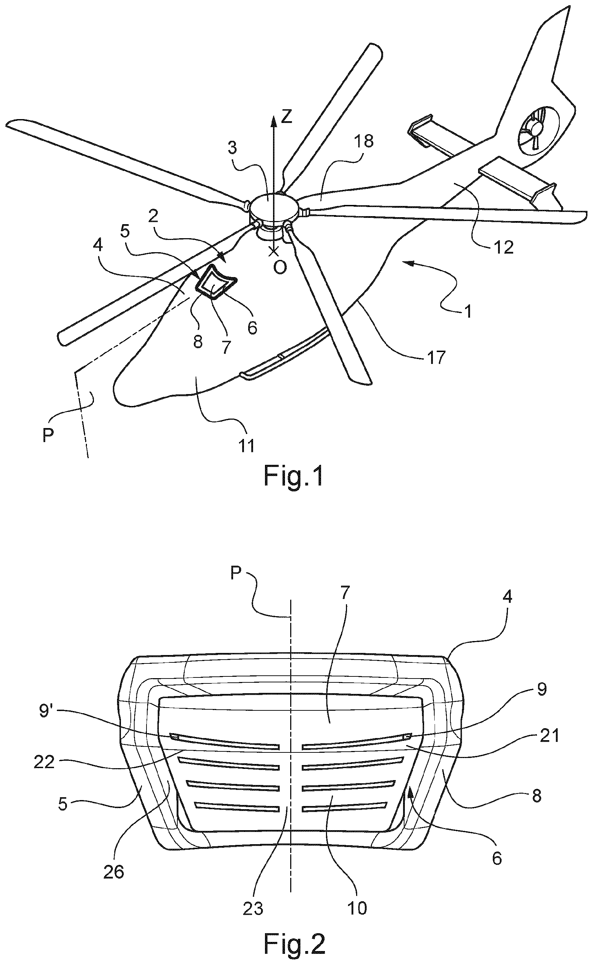

Tel que représenté à la figure 1, un tel giravion 1 comporte un dispositif aérodynamique 2 agencé en dessous du rotor 3 tournant autour d'un axe de rotation OZ. En outre, le dispositif aérodynamique 2 comporte un carénage 4 présentant au moins une entrée d'air 5 pour permettre un écoulement d'un flux d'air frais entre une zone située à l'extérieur du giravion 1 vers une autre zone située à l'intérieur du giravion 1.

Cette entrée d'air 5 présente quant à elle une embouchure 6 délimitée par une portion périphérique externe 8 du carénage 4. Par ailleurs, le dispositif aérodynamique 2 comporte une plaque perforée 7 agencée au niveau de cette embouchure 6.

En outre, la plaque perforée 7 peut s'étendre latéralement de part et d'autre d'un plan antéropostérieur P du giravion 1. Un tel plan antéropostérieur P peut être défini tel un plan agencé verticalement et s'étendant entre une zone avant 11 du giravion 1 et une zone arrière du giravion 1.

Par ailleurs, un tel giravion 1 comporte, selon une direction verticale, une zone inférieure 17 munie généralement d'un train d'atterrissage et une zone supérieure 18 comportant notamment le dispositif aérodynamique 2 et le rotor 3.

Telle que représentée à la figure 2, la plaque perforée 7 comporte au moins une portion principale 10 conformée pour épouser une forme externe de la portion périphérique externe 8 du carénage 4.

De plus, cette plaque perforée 7 est munie d'au moins une perforation 9, 9', chaque perforation 9, 9' étant apte à être traversée par le flux d'air frais. Par exemple, cette plaque perforée 7 peut avantageusement présenter un taux de perforations compris entre 10% et 90% représentatif d'une surface de passage des perforations 9, 9' par rapport à la surface totale de la plaque perforée 7. Préférentiellement, le taux de perforations peut être compris entre 30% et 50% et permet de conférer un débit d'air optimal dans l'entrée d'air vers la zone située à l'intérieur du giravion.

De telles perforations 9, 9' peuvent présenter une forme de fente allongée. Chaque fente peut être agencée en élévation au fur et à mesure que la fente s'éloigne du plan antéropostérieur P du giravion 1.

La plaque perforée 7 peut comporter au moins une première perforation 9 agencée dans une portion gauche 21 de cette plaque perforée 7 par rapport au plan antéropostérieur P et au moins une deuxième perforation 9' agencée quant à elle dans une portion droite 22 de cette plaque perforée 7 par rapport au plan antéropostérieur P.

En outre, cette première perforation 9 et cette deuxième perforation 9' peuvent avantageusement être agencées symétriquement par rapport au plan antéropostérieur P.

Par ailleurs, au moins dans le plan antéropostérieur P, la plaque perforée 7 peut présenter une portion pleine 23 continue séparant ainsi la première perforation 9 de la deuxième perforation 9.

De plus, une ouverture périphérique 26 peut s'étendre entre la plaque perforée 7 et le carénage 4. Une telle ouverture périphérique 26 permet alors également au flux d'air frais de pénétrer jusqu'à la zone située à l'intérieur du giravion 1.

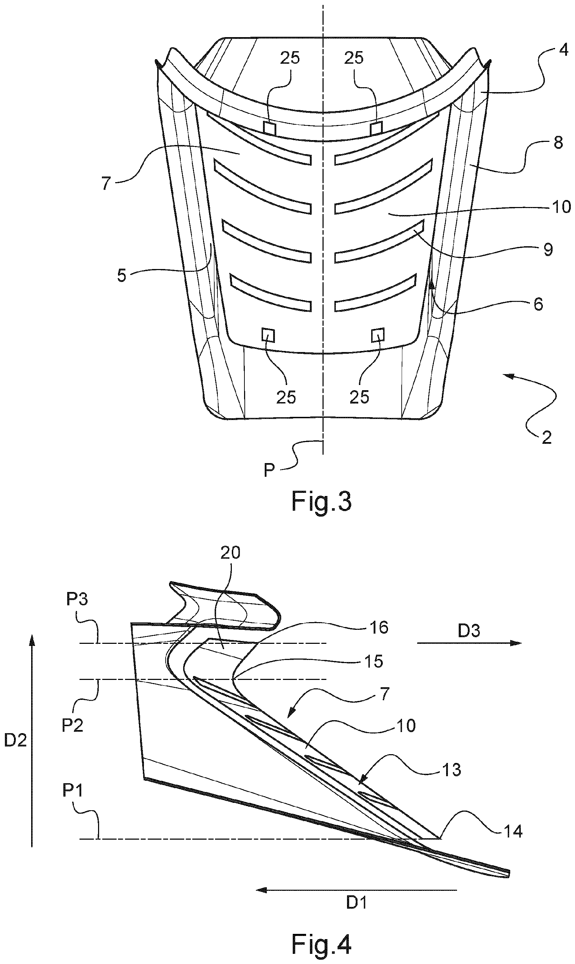

Telle que représentée à la figure 3, le dispositif aérodynamique 2 peut également comporter des moyens de solidarisation réversible 25 permettant à un opérateur, lorsque le giravion 1 est au sol, d'escamoter la plaque perforée 7 et de remplacer très rapidement cette plaque perforée 7 par une autre plaque perforée (non représentée), par exemple en fonction du besoin.

Par exemple, de tels moyens de solidarisation réversible 25 peuvent être formés par des organes de vissage de type « quarts de tour » à actionnement manuel ou au moyen d'un outil tel un tournevis, des systèmes de goupillage de type « attache rapide », des aimants, des organes complémentaires à encliquetage et des doigts d'indexage.

Telle que représentée à la figure 4, dans le plan antéropostérieur P du giravion 1, la plaque perforée 7 peut comporter au moins une génératrice 13. En outre, une telle génératrice 13 est orientée en élévation vers le rotor 3 selon une première direction D1 s'étendant depuis la zone avant 11 du giravion 1 vers la zone arrière 12.

En outre, cette génératrice 13 comporte une extrémité proximale 14 et une première extrémité distale 15. L'extrémité proximale 14 est agencée dans un premier plan P1 perpendiculaire à une deuxième direction D2 orientée depuis la zone inférieure 17 du giravion 1 vers la zone supérieure 18 du giravion 1. La première extrémité distale 15 est quant à elle agencée dans un deuxième plan P2 également perpendiculaire à la deuxième direction D2.

En outre, selon la deuxième direction D2, le premier plan P1 est positionné en dessous du deuxième plan P2.

Par ailleurs, la plaque perforée 7 peut présenter au moins un rabat 20. Ainsi, dans le plan antéropostérieur P et selon une troisième direction D3 opposée à la première direction D1, la génératrice 13 formant le rabat 20 s'étend en élévation vers le rotor 3.

En outre, la génératrice 13 peut alors également comporter une seconde extrémité distale 16. Cette seconde extrémité distale 16 est quant à elle agencée dans un troisième plan P3 également perpendiculaire à la deuxième direction D2. Selon la deuxième direction D2, le deuxième plan P2 est positionné en dessous du troisième plan P3.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen similaire sans sortir du cadre de la présente invention telle que revendiquée.

## Revendications

1. Giravion (1) comportant un dispositif aérodynamique (2) agencé en dessous d'un rotor (3) participant au moins à la sustentation dudit giravion (1) dans les airs, ledit rotor (3) tournant autour d'un axe de rotation (OZ), ledit dispositif aérodynamique (2) comportant un carénage (4) présentant au moins une entrée d'air (5) pour permettre un écoulement d'un flux d'air frais entre une zone située à l'extérieur dudit giravion (1) vers une autre zone située à l'intérieur dudit giravion (1), ladite au moins une entrée d'air (5) étant délimitée par une portion périphérique externe (8) dudit carénage (4),
**caractérisé en ce qu'**au niveau d'une embouchure (6) de ladite au moins une entrée d'air (5) dudit carénage (4), ledit dispositif aérodynamique (2) comporte une plaque perforée (7) munie d'au moins une perforation (9, 9'), ladite au moins une perforation (9, 9') étant apte à être traversée par ledit flux d'air frais, ladite plaque perforée (7) comportant au moins une portion principale (10) conformée pour épouser une forme externe de ladite portion périphérique externe (8) dudit carénage (4).

2. Giravion selon la revendication 1, **caractérisé en ce que** ladite plaque perforée (7) présente un taux de perforations compris entre 10% et 90% représentatif d'une surface de passage de ladite au moins une perforation (9, 9') par rapport à une surface totale de ladite plaque perforée (7).

3. Giravion selon l'une quelconque des revendications 1 à 2, **caractérisé en ce que** ladite plaque perforée (7) s'étend latéralement de part et d'autre d'un plan antéropostérieur (P) dudit giravion (1), ledit plan antéropostérieur (P) étant agencé verticalement et s'étendant entre une zone avant (11) dudit giravion (1) et une zone arrière dudit giravion (12).

4. Giravion selon la revendication 3, **caractérisé en ce que**, dans ledit plan antéropostérieur (P) dudit giravion (1), ladite plaque perforée (7) comporte au moins une génératrice (13), et **en ce que**, selon une première direction (D1) orientée depuis ladite zone avant (11) dudit giravion (1) vers ladite zone arrière (12), ladite au moins une génératrice (13) s'étend en élévation vers ledit rotor (3), ladite au moins une génératrice (13) comportant une extrémité proximale (14) et une première extrémité distale (15), ladite extrémité proximale (14) étant agencée dans un premier plan (P1) situé, selon une deuxième direction (D2) parallèle audit axe de rotation (OZ) et orientée depuis une zone inférieure (17) dudit giravion (1) vers une zone supérieure (18) dudit giravion (1), en dessous d'un deuxième plan (P2) comprenant ladite première extrémité distale (15).

5. Giravion selon la revendication 4, **caractérisé en ce que** ladite plaque perforée (7) présente au moins un rabat (20) et **en ce que**, dans ledit plan antéropostérieur (P) dudit giravion (1) et selon une troisième direction (D3) opposée à ladite première direction (D1), ladite au moins une génératrice (13) formant ledit au moins un rabat (20) s'étend en élévation vers ledit rotor (3), ladite au moins une génératrice (13) comportant une seconde extrémité distale (16), ladite première extrémité distale (15) étant agencée dans ledit deuxième plan (P2) situé, selon ladite deuxième direction (D2), en dessous d'un troisième plan (P3) comprenant ladite seconde extrémité distale (16).

6. Giravion selon l'une quelconque des revendications 1 à 5, **caractérisé en ce que** ladite au moins une perforation (9, 9') présente une forme de fente allongée.

7. Giravion selon l'une quelconque des revendications 3 à 5, **caractérisé en ce que** ladite au moins une perforation (9, 9') présente une forme de fente allongée et ascendante au fur et à mesure que ladite fente s'éloigne dudit plan antéropostérieur (P) dudit giravion (1).

8. Giravion selon l'une quelconque des revendications 3 à 5, **caractérisé en ce que** ladite au moins une perforation (9, 9') comporte une première perforation (9) agencée dans une portion gauche (21) de ladite plaque perforée (7) par rapport audit plan antéropostérieur (P) dudit giravion (1) et une deuxième perforation (9') agencée dans une portion droite (22) de ladite plaque perforée (7) par rapport audit plan antéropostérieur (P) dudit giravion (1), ladite première perforation (9) et ladite deuxième perforation (9') étant agencées symétriquement par rapport audit plan antéropostérieur (P) dudit giravion (1).

9. Giravion selon l'une quelconque des revendications 3 à 5, **caractérisé en ce qu'**au moins dans ledit plan antéropostérieur (P) dudit giravion (1), ladite plaque perforée (7) présente une portion pleine (23) continue.

10. Giravion selon l'une quelconque des revendications 1 à 9, **caractérisé en ce que** ladite plaque perforée (7) est agencée dans ladite embouchure (6), une ouverture périphérique (26) s'étendant entre ladite plaque perforée (7) et ledit carénage (4).

11. Giravion selon l'une quelconque des revendications 1 à 10,
**caractérisé en ce que** le dispositif aérodynamique (2) comporte des moyens de solidarisation réversible (25) permettant, lorsque ledit giravion (1) est au sol, d'escamoter ladite plaque perforée (7) et de remplacer ladite plaque perforée (7) par une autre plaque perforée.

12. Giravion selon la revendication 11,
**caractérisé en ce que** lesdits moyens de solidarisation réversible (25) sont choisis parmi le groupe comportant des organes de vissage de type « quarts de tour », des systèmes de goupillage de type « attache rapide », des aimants, des organes complémentaires à encliquetage et des doigts d'indexage.

## Patentansprüche

1. Drehflügelflugzeug (1) mit einer aerodynamischen Vorrichtung (2), die unterhalb eines Rotors (3) angeordnet ist, der zumindest am Auftrieb des Drehflügelflugzeugs (1) in der Luft beteiligt ist, wobei der Rotor (3) um eine Drehachse (OZ) rotiert, die aerodynamische Vorrichtung (2) eine Verkleidung (4) mit mindestens einem Lufteinlass (5) umfasst, um eine Strömung eines Frischluftstroms zwischen einem außerhalb des Drehflügelflugzeugs (1) gelegenen Bereich und einem anderen, innerhalb des Drehflügelflugzeugs (1) gelegenen Bereich zu ermöglichen, wobei der mindestens eine Lufteinlass (5) durch einen äußeren Umfangsabschnitt (8) der Verkleidung (4) begrenzt ist,
**dadurch gekennzeichnet, dass** an einer Einlassöffnung (6) des mindestens einen Lufteinlasses (5) der Verkleidung (4) die aerodynamische Vorrichtung (2) eine durchbrochene Platte (7) umfasst, die mit mindestens einer Durchbrechung (9, 9') versehen ist, wobei die mindestens eine Durchbrechung (9, 9') geeignet ist, von dem Frischluftstrom durchquert zu werden, wobei die durchbrochene Platte (7) mindestens einen Hauptabschnitt (10) aufweist, der geformt ist, um sich an eine äußere Form des äußeren Umfangsabschnitts (8) der Verkleidung (4) anzuschmiegen.

2. Drehflügelflugzeug nach Anspruch 1,
**dadurch gekennzeichnet, dass** die durchbrochene Platte (7) eine Perforationsrate zwischen 10% und 90% aufweist, die das Verhältnis einer Durchgangsfläche der mindestens einen Durchbrechung (9, 9') zu einer Gesamtfläche der durchbrochenen Platte (7) angibt.

3. Drehflügelflugzeug nach einem der Ansprüche 1 bis 2, **dadurch gekennzeichnet, dass** sich die durchbrochene Platte (7) seitwärts auf beiden Seiten einer anteroposterioren Ebene (P) des Drehflügelflugzeugs (1) erstreckt, wobei die anteroposteriore Ebene (P) vertikal angeordnet ist und sich zwischen einem vorderen Bereich (11) des Drehflügelflugzeugs (1) und einem hinteren Bereich des Drehflügelflugzeugs (12) erstreckt.

4. Drehflügelflugzeug nach Anspruch 3, **dadurch gekennzeichnet, dass** in der anteroposterioren Ebene (P) des Drehflügelflugzeugs (1) die durchbrochene Platte (7) mindestens eine Erzeugende (13) aufweist, und dass in einer ersten Richtung (D1), die von dem vorderen Bereich (11) des Drehflügelflugzeugs (1) zu dem hinteren Bereich (12) gerichtet ist, die mindestens eine Erzeugende (13) sich in Elevation zu dem Rotor (3) hin erstreckt, dass die mindestens eine Erzeugende (13) ein proximales Ende (14) und ein erstes distales Ende (15) aufweist, wobei das proximale Ende (14) in einer ersten Ebene (P1) angeordnet ist, die in einer zur Drehachse (OZ) parallelen und von einem unteren Bereich (17) des Drehflügelflugzeugs (1) zu einem oberen Bereich (18) des Drehflügelflugzeugs (1) ausgerichteten zweiten Richtung (D2) unterhalb einer zweiten Ebene (P2) liegt, die das erste distale Ende (15) umfasst.

5. Drehflügelflugzeug nach Anspruch 4, **dadurch gekennzeichnet, dass** die durchbrochene Platte (7) mindestens einen Umbruch (20) aufweist und dass in der anteroposterioren Ebene (P) des Drehflügelflugzeugs (1) und in einer dritten Richtung (D3), die der ersten Richtung (D1) entgegengesetzt ist, die mindestens eine Erzeugende (13), die den mindestens einen Umbruch (20) bildet, sich in Elevation zum Rotor (3) hin erstreckt, dass die mindestens eine Erzeugende (13) ein zweites distales Ende (16) aufweist, und dass das erste distale Ende (15) in der zweiten Ebene (P2) angeordnet ist, die entlang der zweiten Richtung (D2) unterhalb einer dritten Ebene (P3) liegt, die das zweite distale Ende (16) umfasst.

6. Drehflügelflugzeug nach einem der Ansprüche 1 bis 5, **dadurch gekennzeichnet, dass** die mindestens eine Durchbrechung (9, 9') eine langgestreckte Schlitzform aufweist.

7. Drehflügelflugzeug nach einem der Ansprüche 3 bis 5, **dadurch gekennzeichnet, dass** die mindestens eine Durchbrechung (9, 9') eine langgestreckte Schlitzform aufweist, die in dem Maße ansteigt, wie sich der Schlitz von der anteroposterioren Ebene (P) des Drehflügelflugzeugs (1) entfernt.

8. Drehflügelflugzeug nach einem der Ansprüche 3 bis 5, **dadurch gekennzeichnet, dass** die mindestens eine Durchbrechung (9, 9') eine erste Durchbrechung (9), die in einem linken Abschnitt (21) der perforierten Platte (7) in Bezug auf die anteroposteriore Ebene (P) des Drehflüglers (1) angeordnet ist, und eine zweite Durchbrechung (9'), die in einem rechten Abschnitt (22) der perforierten Platte (7) in Bezug auf die anteroposteriore Ebene (P) des Drehflüglers (1) angeordnet ist, umfasst, wobei die erste Durchbrechung (9) und die zweite Durchbrechung (9') symmetrisch in Bezug auf die anteroposteriore Ebene (P) des Drehflügelflugzeugs (1) angeordnet sind.

9. Drehflügelflugzeug nach einem der Ansprüche 3 bis 5, **dadurch gekennzeichnet, dass** die durchbrochene Platte (7) zumindest in der anteroposterioren Ebene (P) des Drehflügelflugzeugs (1) einen durchgehenden massiven Abschnitt (23) aufweist.

10. Drehflügelflugzeug nach einem der Ansprüche 1 bis 9, **dadurch gekennzeichnet, dass** die durchbrochene Platte (7) in der Einlassöffnung (6) angeordnet ist, und dass sich eine umlaufende Öffnung (26) zwischen der durchbrochene Platte (7) und der Verkleidung (4) erstreckt.

11. Drehflügelflugzeug nach einem der Ansprüche 1 bis 10, **dadurch gekennzeichnet, dass** die aerodynamische Vorrichtung (2) lösbare Verbindungsmittel (25) aufweist, die es ermöglichen, wenn sich das Drehflügelflugzeug (1) am Boden befindet, die perforierte Platte (7) zu versenken und die perforierte Platte (7) durch eine andere perforierte Platte zu ersetzen.

12. Drehflügelflugzeug nach Anspruch 11,**dadurch gekennzeichnet, dass** die lösbaren Verbindungsmittel (25) aus der Gruppe ausgewählt sind, die Schrauborgane vom Typ "Vierteldrehung", Stiftsysteme vom Typ "Schnellbefestigung", Magnete, komplementäre Rastorgane und Indexierungsfinger umfasst.

## Claims

1. Rotorcraft (1) including an aerodynamic device (2) arranged below a rotor (3) contributing at least to the lift of said rotorcraft (1) in air, said rotor (3) turning around an axis of rotation (OZ), said aerodynamic device (2) including a fairing (4) having at least one air intake (5) for allowing a flow of cool air between a zone situated outside said rotorcraft (1) to another zone situated inside said rotorcraft (1), said at least one air intake (5) being delimited by an outer peripheral portion (8) of said fairing (4),
**characterised in that**, at the mouth (6) of said at least one air intake (5) of said fairing (4), said aerodynamic device (2) includes a perforated plate (7) provided with at least one perforation (9, 9'), said at least one perforation (9, 9') being able to accept the passage of said flow of cool air, said perforated plate (7) including at least one main portion (10) configured to conform to an outer shape of said outer peripheral portion (8) of said fairing (4).

2. Rotorcraft according to claim 1, **characterised in that** said perforated plate (7) has a perforation percentage between 10% and 90%, representative of a passage surface of said at least one perforation (9, 9') with respect to a total surface of said perforated plate (7).

3. Rotorcraft according to either one of claims 1 to 2, **characterised in that** said perforated plate (7) extends laterally on either side of an anteroposterior plane (P) of said rotorcraft (1), said anteroposterior plane (P) being arranged vertically and extending between a forward zone (11) of said rotorcraft (1) and an aft zone (12) of said rotorcraft .

4. Rotorcraft according to claim 3, **characterised in that**, in said anteroposterior plane (P) of said rotorcraft (1), said perforated plate (7) comprises at least one generatrix (13) and **in that**, along a first direction (D1), oriented from said forward zone (11) of said rotorcraft (1) to said aft zone (12), said at least one generatrix (13) extends in elevation towards said rotor (3), said at least one generatrix (13) comprising a proximal end (14) and a first distal end (15), said proximal end (14) being arranged in a first plane (P1) situated, along a second direction (D2) parallel to said axis of rotation (OZ) and oriented from a lower zone (17) of said rotorcraft (1) to an upper zone (18) of said rotorcraft (1), below a second plane (P2) comprising said first distal end (15).

5. Rotorcraft according to claim 4, **characterised in that** said perforated plate (7) displays at least one turnback (20) and **in that**, in said anteroposterior plane (P) of said rotorcraft (1) and along a third direction (D3) opposite to said first direction (D1), said at least one generatrix (13) forming said at least one turnback (20) extends in elevation towards said rotor (3), said at least one generatrix (13) including a second distal end (16), said first distal end (15) being arranged in said second plane (P2), situated, along said second direction (D2), below a third plane (P3) comprising said second distal end (16).

6. Rotorcraft according to any one of claims 1 to 5, **characterised in that** said at least one perforation (9, 9') has an elongated slot shape.

7. Rotorcraft according to any one of claims 3 to 5, **characterised in that** said at least one perforation (9, 9') has a slot shape, elongated and rising as said slot moves away from said anteroposterior plane (P) of said rotorcraft (1).

8. Rotorcraft according to any one of claims 3 to 5, **characterised in that** said at least one perforation (9, 9') includes a first perforation (9) arranged in a portion of said perforated plate (7) on the left (21) with respect to said anteroposterior plane (P) of said rotorcraft (1) and a second perforation (9') arranged in a portion of said perforated plate (7) on the right (22) with respect to said anteroposterior plane (P) of said rotorcraft (1), said first perforation (9) and said second perforation (9') being arranged symmetrically with respect to said anteroposterior plane (P) of said rotorcraft (1).

9. Rotorcraft according to any one of claims 3 to 5, **characterised in that** at least in said anteroposterior plane (P) of said rotorcraft (1), said perforated plate (7) displays a continuous solid portion (23).

10. Rotorcraft according to any one of claims 1 to 9, **characterised in that** said perforated plate (7) is arranged in said mouth (6), a peripheral opening (26) extending between said perforated plate (7) and said fairing (4).

11. Rotorcraft according to any one of claims 1 to 10, **characterised in that** the aerodynamic device (2) includes reversible solidarisation means (25) making it possible, when said rotorcraft (1) is on the ground, to retract said perforated plate (7) and to replace said perforated plate (7) with another perforated plate.

12. Rotorcraft according to claim 11, **characterised in that** said reversible solidarisation means (25) are chosen from the group including screwing components of the "quarter turn" type, pinning systems of the "rapid fastening" type, magnets, additional snap-on components and locking pins.
